# EUROPÄISCHE PATENTSCHRIFT

(11) **EP 1 616 487 B1**
(45) Veröffentlichungstag und Bekanntmachung des Hinweises auf die Patenterteilung: **22.07.2009**
(21) Anmeldenummer: 05014146.4
(22) Anmeldetag: 30.06.2005
(51) Int. Cl.: A23G 1/18, A23G 1/00, A23G 1/04

(54) **Verfahren und Vorrichtung zum kontinuierlichen Aufbereiten von zu verarbeitenden fetthaltigen Massen**
Process and apparatus for continuously preparing fat containing masses to be processed
Procédé et dispositif pour la préparation en continu des masses comprennant de la matière grasse destinées à la production

(30) Priorität: 13.07.2004 DE 102004033712
(43) Veröffentlichungstag der Anmeldung: 18.01.2006
(73) Patentinhaber: Sollich KG, 32105 Bad Salzuflen (DE)
(72) Erfinder: Bäumer, Volker, 32108 Bad Salzuflen (DE); Ridderbusch, Gerhard, 32105 Bad Salzuflen (DE)
(74) Vertreter: Rehberg Hüppe + Partner

(56) Entgegenhaltungen:
- EP-A- 1 425 975
- DE-A1- 2 602 877
- DE-C1- 10 118 354
- FR-A- 2 063 186

## Beschreibung

Die Erfindung betrifft ein Verfahren und eine Vorrichtung zum kontinuierlichen Aufbereiten von zu verarbeitenden fetthaltigen Massen, insbesondere von Schokolademasse. Die Schokolademasse kann Kakaobutter und/oder auch andere Fette enthalten. Eine solche Masse wird üblicherweise aufgeschmolzen oder jedenfalls erwärmt. Sie liegt damit in flüssigem pumpbarem Zustand vor und ist kristallfrei. Die Masse wird dann temperiert sowie anschließend einer Weiterverarbeitung zugeführt. Unter der Temperierung wird die bekannte thermische Behandlung der Masse durch Abkühlung mit nachfolgender Wiedererwärmung verstanden. Während und nach der Abkühlung bilden sich in der Masse Kakaobutterkristalle. Die Masse ist aber zum bei weitem überwiegenden Teil auch weiterhin flüssig, da sie nur in diesem Zustand einer Weiterverarbeitungsstation, z. B. einer Überziehmaschine oder einer Gießmaschine, zugeführt werden und dort verarbeitet werden kann.

### STAND DER TECHNIK

Die DE 101 18 354 C1 zeigt und beschreibt ein Verfahren und eine Vorrichtung zum kontinuierlichen Aufbereiten einer zu verarbeitenden fetthaltigen Masse, insbesondere Schokolademasse mit den in den Oberbegriffen der Ansprüche 1 und 6 wiedergegebenen Merkmalen. Die zu verarbeitende fetthaltige Masse wird zunächst in einem Behälter oder Tank so erwärmt, dass sie in flüssigem, pumpbarem Zustand vorliegt. Anschließend wird die Masse temperiert. Vor, während oder nach der Temperierung wird von der zu verarbeitenden Masse ein Teil abgezweigt. Bei dem Ausführungsbeispiel, bei dem die Abzweigung eines Teils der Masse nach der Temperierung erfolgt, geschieht dies in der Förderleitung zu einer Weiterverarbeitung, z. B. einem Verbraucher. Diesem abgezweigten Teil der Masse werden anderweitig gebildete Impfkristalle mit einem offenen Trichter hinzugefügt. Durch Vermischung entsteht eine Suspension, die einer Temperiereinheit zugeführt wird. Zur Erreichung einer schonenden, homogenen und kontinuierlichen Vermischung der Impfkristalle kann ein statischer Mischer vorgesehen sein, also ein Mischer ohne bewegte Teile. Durch die Hinzufügung der Impfkristalle ändert sich die Zusammensetzung der zu verarbeitenden Masse. Vorteilhaft ist es bei dem bekannten Verfahren möglich, die Verarbeitungstemperaturen der Masse am Ausgang der Temperiereinheit in einen Bereich von etwa 32 °C bis 35 °C anzuheben. Dies begünstigt die Weiterverarbeitung der Masse, insbesondere die Fließfähigkeit. Die Hinzufügung von Impfkristallen setzt jedoch deren aufwendige Herstellung und Handhabung bei der Verarbeitung der Massen voraus. Andererseits lässt sich durch das Zudosieren von Impfkristallen der Anteil der Kristalle in der zu verarbeitenden Masse steigern, so dass vorteilhaft nach der Verarbeitung der Masse ein Produkt mit den gewünschten Eigenschaften entsteht.

Ein weiteres Verfahren und eine Vorrichtung zum kontinuierlichen Aufbereiten einer zu verarbeitenden fetthaltigen Masse, insbesondere Schokolademasse, ist aus der EP 1 425 975 A1 bekannt. Die aufzubereitende Schokolademasse wird mit einer Eingangstemperatur von 40-50 °C durch eine Temperiereinheit geführt, in der drei Zonen angeordnet sind, um drei Prozessstufen durchzuführen. In der ersten Zone wird die Masse auf eine Temperatur unter 37 °C abgekühlt, damit zumindest hochschmelzende β-Kristalle entstehen und überleben. In der zweiten Zone findet die wesentliche Kristallbildung statt. In der dritten Zone wird die Masse auf konstanter Temperatur gehalten oder geringfügig angewärmt, um instabile Kristalle auszuschmelzen. Über eine Förderleitung wird die fertig temperierte Masse einer Weiterverarbeitungsstelle zugeführt. Es ist eine Rückführleitung vorgesehen, deren Beginn an das Ende der dritten Zone angeschlossen ist. In dieser Rückführleitung ist eine Förderpumpe vorgesehen, um den Teil der abgezweigten Masse aus der dritten Zone in den Bereich der zweiten Zone rückzufördern. In dieser Rückführleitung kann eine Temperiereinrichtung vorgesehen sein, die mechanisch die rückgeführte Masse bearbeitet und einem Schereffekt aussetzt. Dieser Schereffekt wird mit einer solchen Intensität angewendet, dass ein überwiegender Anteil βVI-Kristalle in der rückgeführten Masse gebildet werden. Jedoch darf die Intensität der mechanischen Scherbehandlung nicht so gesteigert werden, dass die rückgeführte Masse eine Temperatur höher als 37 °C einnimmt.

Aus der WO 00/72695 A1 ist ein Verfahren und eine Vorrichtung bekannt, die auf die Herstellung von fettschmelzebasierten Impfkristallsuspensionen mit hohem β_{VI}-Modifikationsanteil sowie deren Einsatz bei der Impfkristallisation von fettbasierten, disperse Feststoffpartikel enthaltenden Suspensionen, wie Schokolade, schokoladeähnliche Massen oder dergleichen beschrieben. In der Impfkristallsuspension soll der Gesamtkristallgehalt, der Anteil an hochschmelzenden β_{VI}-Kristallmodifikation sowie die mittlere Kristallgröße einstellbar sein. Zu diesem Zweck wird ein kaltgesprühtes Fettpulver einer stufenweisen thermischen Konditionierung derart unterzogen, dass ohne Verklumpung der Pulverteilchen eine Modifikationeumwandlung des polymorphen Fettsystems so weit voranschreitet, dass die thermisch hochstabilen β_{VI}-Kristalle zu einem Anteil von größer/gleich 10 % ausgebildet werden. Das derart konditionierte Fettpulver wird in einer kristallfreien, auf etwa 1 bis 2 °C unterhalb der Schmelzenthalpie Peak-Minimaltemperatur der β_{VI}-Kristallmodifikation temperierten Fettschmelze suspendiert. Im Falle der Aufbereitung einer Schokolademasse wird als Fettschmelze Kakaobutter eingesetzt. Diese Fettpulversuspension wird unter definierter Abstimmung von mechanischen und thermischen Bedingungen sowie der Verweilzeit in einer Scher-/Dehnströmung behandelt, bis zur Erreichung der einzustellenden Charakteristika Gesamtkristallgehalt, β_{VI}-Modifikationsanteil und mittlerer Kristallgröße. Die somit in sehr aufwendiger Weise erzeugte Impfkristallsuspension wird in den Produktstrom einer vorzukristallisierenden Schokolade oder schokoladeähnlichen Masse mit Impfkristallanteilen zwischen 0,01 und 0,2 % (bezogen auf Gesamtmasse) gleichmäßig zudosiert und danach im Produktstrom schonend, homogen und kontinuierlich vermischt. Die Vorrichtung zur Durchführung des Verfahrens benötigt einen Kaltsprühturm, eine Temperierkammer, einen Suspensions-Rührbehälter, einen Scher-/Dehnströmungsmodul, eine Pumpe und einen statischen Mischer. Außerdem ist ein Tank für die Bereitstellung der erwärmten flüssigen Schokolademasse und eine von dort zum Verbraucher führende Förderleitung mit Förderpumpe erforderlich. In dieser Förderleitung ist ein Wärmetauscher und diesem nachgeschaltet ein statischer Mischer vorgesehen. Nachteilig daran ist der erhebliche maschinelle Aufwand und die aufwendige Impfkristallherstellung und -konditionierung. Als zusätzlicher Rohstoff zu der Schokolademasse wird Kakaobutter benötigt. Durch die Verwendung von zwei unterschiedlichen Rohstoffen erhöht sich der maschinelle Aufwand weiter, da beide Rohstoffe getrennt aufgeschmolzen und auch getrennt gekühlt werden müssen. Problematisch erscheint auch die Verteilung der aufbereiteten Schokolademasse auf verschiedene Verbraucher bei einem Hersteller von Schokoladeprodukten. Durch die Bildung der Impfkristalle auf Basis von Kakaobutter während des Verfahrens wird das Verfahren für einen Hersteller von Schokoladeprodukten nicht nur aufwendig und teuer. Durch die Hinzufügung der Impfkristallsuspension zu der zu verarbeitenden Masse ändert sich in unerwünschter Weise deren Zusammensetzung. Wenn die Weiterverarbeitung unter Überschuss geschieht, erhöht sich die Kakaobutterkonzentration in der Schokolademasse, deren Viskosität und auch die Rezeptur.

Aus der DE-AS 1 145 468 ist ein Verfahren und eine Vorrichtung zur Verarbeitung von Schokolademasse bekannt, bei dem die conchierte flüssige Schokolademasse in einem temperierten Speicherbehälter bei einer Temperatur von 45 bis 55 °C gehalten wird. Die Masse wird über eine Druckpumpe einer Temperiereinheit zugeführt. Sie weist am Eingang in die Temperiereinheit einen Überdruck von 15 bis 20 bar auf. Die Masse wird während des Durchlaufs durch die Temperiereinheit bis auf etwa 23 °C abgekühlt, verbleibt jedoch in fließfähigem Zustand. Die sich an der Wandung bildenden Kristalle der zu verarbeitenden Masse werden abgestreift und mit entsprechenden Misch- und Rührelementen in der Masse verteilt. Am Ausgang der Temperiereinheit befindet sich eine Düse, über die die Masse unmittelbar in Formen abgegeben wird, wobei die Masse sofort erstarrt und sich kleinste Fettkristalle homogen über den gesamten Querschnitt der Gussstücke ausbilden. Die gesamte zu verarbeitende Masse wird unter Druck gesetzt und temperiert. Die Möglichkeit der Weiterverarbeitung der temperierten Masse ist auf das unmittelbare Ausgießen und Erstarren in Formen beschränkt. Eine Fließfähigkeit ist praktisch nicht mehr gegeben. Es ist nicht möglich, eine solche Masse beispielsweise in einer Überziehmaschine weiterzuverarbeiten und dort ein Produkt mit der Masse gleichmäßig zu überziehen.

Aus der DE-OS 26 02 877 ist ein Verfahren und eine Vorrichtung zur Verarbeitung von Schokolademasse bekannt, bei dem ebenfalls eine Conche Anwendung findet, in der ein entsprechend großes Massevolumen unter konstant gehaltener Temperatur gerührt wird. Ein Teil dieser Masse wird von der Conche abgezweigt und einem Rührwerksbehälter zugeführt. Vom Ende des Rührwerksbehälters zweigt einerseits eine zu einer Weiterverarbeitungsstation führende Förderleitung ab. Andererseits zweigt vom Ende des Rührwerksbehälters eine zum Anfang des Rückführbehälters führende Rückführleitung ab, mit der ein Teil der im Rührwerksbehälter vorhandenen Masse rückgeführt wird. In der Rückführleitung ist eine Förderschnecke vorgesehen, deren doppelte Wandung an einen Kühlkreislauf angeschlossen ist. Damit wird der rückgeführte Teil der Masse in der Rückführleitung und der Förderschnecke so gekühlt, dass sich instabile Kristalle bilden. Der rückgeführte Teil der Masse wird dem Anfang des Rührwerksbehälters wieder zugeführt. Durch die Temperaturerhöhung der instabilen Kristalle auf die im Rührwerksbehälter herrschende Temperatur nehmen diese instabilen Kristalle im Rührwerksbehälter stabile Form an und regen gleichzeitig die unbekeimte Masse im Rührwerksbehälter zur Bildung stabiler Kristalle an.

### AUFGABE DER ERFINDUNG

Der Erfindung liegt die Aufgabe zugrunde, ein Verfahren und eine Vorrichtung zum kontinuierlichen Aufbereiten einer zu verarbeitenden fetthaltigen Masse, insbesondere Schokolademasse, aufzuzeigen, mit denen ein höherer Anteil stabiler β_{V}-Kristalle in der Masse ohne Rezepturverfälschung erzeugt werden können. Dabei soll es möglich sein, höhere Verarbeitungstemperaturen als etwa 31 °C in der Masse zu erzeugen und bei der Weiterverarbeitung zu nutzen.

### LÖSUNG

Die Aufgabe der Erfindung wird erfindungsgemäß mit den Merkmalen der unabhängigen Patentansprüche 1 und 6 gelöst.

### BESCHREIBUNG DER ERFINDUNG

Bei dem erfindungsgemäßen Verfahren wird von der temperierten Masse, also der in bekannter Weise zumindest abgekühlten und gegebenenfalls wiedererwärmten Masse, ein Teil abgezweigt und im Kreislauf zurückgeführt. Unter einer Temperierung der Masse wird einerseits die bisher bekannte übliche Temperierung, also bestehend aus Abkühlung mit nachfolgender Wiedererwärmung der Masse, verstanden. Ausgehend von einer Temperatur der Masse in dem vorgeschalteten Tank von etwa 45 bis 50 °C kann bei der Abkühlung in der Temperiereinheit eine Temperatur von etwa 28 bis 29 °C erreicht werden. Nach der Wiedererwärmung hat die zur Weiterverarbeitung vorgesehene Masse dann eine Temperatur von etwa 31 bis 34 °C. Andererseits soll der Begriff der Temperierung aber auch eine Behandlung bzw. Aufbereitung der Masse umfassen, bei der die Masse zwar abgekühlt, aber nicht wiedererwärmt wird. Dies kann so geschehen, dass die Temperatur der Masse in der Kühl- oder Kristallisierzone der Temperiereinheit bis auf etwa 31 bis 34 °C abgekühlt wird und in der üblichen Nachwärmzone nicht weiter steigt. Diese Nachwärmzone dient damit bevorzugt der Vermischung des zu temperierenden oder teiltemperierten Hauptstroms der Masse mit der rückgeführten Teilmenge. Da die Teilmenge eine vergleichsweise niedrigere Temperatur aufweist, jedoch mengenmäßig klein bemessen ist, genügt unter Umständen die von der nachfolgenden Zone eingebrachte Reibungswärme, um die Verarbeitungstemperatur von 31 bis 34 °C zu erreichen bzw. beizubehalten.

Der abgezweigte Teil der Masse enthält nach der Temperierung eine gewisse Menge an gebildeten Kristallen. Während der Rückführung wird diese Menge in dem abgezweigten Teil der Masse angereichert. Durch Kühlung des Teils der Masse entsteht eine Vermehrung der in ihm enthaltenen Kristalle. Dieser Teil mit den vermehrt in ihm enthaltenen Kristallen wird der zu temperierenden Masse während der Temperierung wieder hinzugefügt. Dies geschieht beispielsweise durch Injektion im Bereich der Kühlzone der Temperiereinheit. Es ist jedoch auch möglich, die Teilmenge mit den angereicherten Kristallen in einer gesondert ausgebildeten Kristallbildungsstufe der Temperiereinheit oder sogar am Anfang der Nachwärmzone oder einer Mischzone hinzuzufügen. Die Teilmenge lässt sich in einfacher Weise mengenmäßig und temperaturmäßig steuern, so dass die Anreicherung der Kristalle sehr genau eingestellt werden kann. Der rückgeführte Teil der Masse kann etwa einen Anteil von 3 bis 15 % der am Ende der Temperiereinheit austretenden Menge der zu verarbeitenden Masse ausmachen. Die Abkühlung der Teilmenge während der Rückführung geschieht je nach Anwendungsfall in einem Temperaturbereich unterhalb etwa 28 bis 29 °C, vorzugsweise jedoch in einem Bereich von 20 bis 25 °C.

Eine zur Durchführung des Verfahrens besonders geeignete Vorrichtung besitzt eine Temperiereinheit, die in an sich bekannter Weise ausgebildet ist, insbesondere einen Säulentemperer mit abwechselnd angeordneten Masse- und Kühlkammern. Der Säulentemperer kann eine Kühlzone, eine Kristallbildungszone und eine Nachwärmzone aufweisen. Vom Ausgang der Tempiereinheit führt eine Förderleitung zu einer Weiterverarbeitungsstation, beispielsweise einer Überziehmaschine oder einer Gießmaschine. Von dieser Förderleitung zweigt eine Rückführleitung ab, deren Ende wiederum an die Temperiereinheit angeschlossen ist und zu einer dort vorgesehenen Massekammer in Verbindung steht. Eine in der Rückführleitung angeordnete Förderpumpe dient der Förderung bzw. Bewegung der rückgeförderten Teilmenge. Zur Abkühlung und Vermehrung der in der abgezweigten Teilmenge enthaltenen Kristalle ist in der Rückführleitung ein Wärmetauscher vorgesehen, der die Abkühlung der rückgeförderten Teilmenge erbringt. Es versteht sich, dass der Wärmetauscher an einen entsprechenden Kühlkreislauf angeschlossen ist.

Das Verfahren und die Vorrichtung weisen eine Reihe von Vorteilen auf. Bedeutsam sind höhere mögliche Verarbeitungstemperaturen. Die Nachwärmzone an der Temperiereinheit kann so eingestellt werden, dass die aus der Temperiereinheit austretende Masse eine Temperatur höher als 31 °C, insbesondere eine Temperatur zwischen 31 und 34 °C aufweist, mit der sie unter Einsatz entsprechender Schutzmaßnahmen dann auch der Weiterverarbeitung zugeführt werden kann. Aus der höheren Verarbeitungstemperatur ergibt sich eine Reduzierung der Viskosität der Masse. Hieraus wiederum resultiert eine Verbesserung der Fließfähigkeit, ein Vorteil, von dem insbesondere in einer Überziehmaschine sinnvoll Gebrauch gemacht werden kann, indem gleichmäßige und dünne Überzüge mit entsprechendem Kostenvorteil erzeugt werden können. Diese und andere Vorteile basieren auf dem vergleichsweise höheren Anteil stabiler β_{V}-Kristalle in der zu verarbeitenden Masse, wie es durch die Anreicherung der Kristalle im Kreislauf erreicht wird. Der höhere Anteil der stabilen Kristalle bedeutet eine stärkere Vorkristallisation der Masse. Die vorteilhafte Folge davon sind wiederum kürzere Kühlzeiten der hergestellten Produkte. Im Vergleich zum Stand der Technik, insbesondere bei der Verwendung von Impfkristallen, ändert sich die Rezeptur der Masse nicht. Es ergibt sich sogar eine relative Einsparung von Kakaobutter, die in der Größenordnung von etwa 1 % liegen kann. Bekanntermaßen führt eine Reduzierung des Kakaobutteranteils zu einer nachteiligen Viskositätssteigerung. Diese wird wiederum ausgeglichen durch die höheren möglichen Verarbeitungstemperaturen. Insgesamt lässt sich so vorteilhaft der Kakaobutteranteil reduzieren. Dies erbringt finanzielle Vorteile für den Hersteller der betroffenen Produkte.

Das neue Verfahren und die neue Vorrichtung setzen sich in deutlichen Gegensatz zu den durch Impfkristallisation aufgezeigten Wegen. Der zu verarbeitenden Masse wird keine zweite Masse hinzugefügt, sondern die Rezeptur der Masse bleibt konstant. Vorteilhaft findet lediglich eine Anreicherung der Kristalle statt.

Die Vorrichtung baut vorteilhaft auf bekannten Temperiereinheiten oder Temperiermaschinen auf, insbesondere auf bekannten Säulentemperierern mit etagenweise abwechselnd übereinander angeordneten Masse- und Kühlkammern. Es kann aber praktisch jede Art solcher Temperiermaschinen eingesetzt werden, insbesondere solche, die an unterschiedliche Temperierkreisläufe angeschlossene Kühlzonen, Kristallbildungszonen und Nachwärmzonen aufweisen. Dabei entsteht der weitere Vorteil, dass der maschinelle Aufwand der neuen Vorrichtung gering ist. Vorhandene Temperiermaschinen können ohne weiteres nachgerüstet werden. Sie können auch im nachgerüsteten Zustand in der bisher bekannten Weise betrieben werden, indem die Rückführung der Teilmenge stillgesetzt wird. Hierzu genügt es schon allein, die Förderpumpe auszuschalten, so dass dann mit der Temperiereinheit in bisher bekannter Weise aufbereitet, also abgekühlt und wiedererwärmt werden kann.

Die abgezweigte Teilmenge der Masse kann vor der Hinzufügung zu der zu temperierenden Masse unter Druck gesetzt und nachfolgend expandiert werden. Für diesen Expansionsvorgang findet eine besonders intensive Bildung von Kristallen in der rückgeführten Masse statt. Dabei ergeben sich zwei Möglichkeiten. Besonders vorteilhaft ist es, wenn trotz der Abkühlung und/oder der Expansion die rückgeführte Teilmenge weiterhin flüssig, zumindest teigig, bleibt, um die Förderung während des Rückführens einfach und günstig zu gestalten. Es kann sinnvoll sein, die Expansion möglichst benachbart zu der Rückführung an der Temperiereinheit zu verwirklichen. Aber auch die Zwischenschaltung einer Verweilstrecke an dieser Stelle bietet vorteilhafte Möglichkeiten. Die Verweilstrecke kann aus einer entsprechend lang ausgebildeten Rohrleitung bestehen. Andererseits ist es möglich, dass die abgezweigte Teilmenge der Masse vor der Hinzufügung zu der zu temperierenden Masse in den festen Zustand überführt und anschließend in feine Partikel unterteilt wird. Die kleinen unterteilten Partikel können mit einem Zerkleinerungswerkzeug, beispielsweise einem Fräskopf, gewonnen werden und so in entsprechender Dosierung der zu temperierenden Masse hinzugefügt werden. Die unterteilten festen Partikel können auch in einem flüssig gehaltenen Teilstrom forciert werden.

Die neue Vorrichtung sieht eine Rückführleitung zwischen der Förderleitung und der Temperiereinheit vor, so dass hier eine geschlossene Schleife für einen Teilkreislauf gebildet wird. In der Rückführleitung ist zumindest eine Förderpumpe erforderlich, die die Aufgabe hat, die Förderung zu bewirken, also die Teilmenge anzutreiben. Auf jeden Fall ist eine Abkühlung der abgezweigten Teilmenge zwecks Vermehrung der in ihr enthaltenen Kristalle erforderlich. Hierzu wird ein Wärmetauscher eingesetzt, der über einen Kühlkreislauf entsprechend gesteuert wird, je nach dem, auf welche Temperatur die rückgeführte Teilmenge abgekühlt werden soll.

Die Förderpumpe in der Rückführleitung kann durch eine Druckpumpe ersetzt oder ergänzt werden. Die Druckpumpe ermöglicht den Aufbau eines Überdruckes, vorzugsweise im Bereich zwischen 8 und 18 bar. Dies zielt darauf ab, die rückgeführte Teilmenge trotz der vermehrten Bildung der Kristalle flüssig und damit pumpbar zu halten. Dies gilt auch für ein der Druckpumpe nachgeschaltetes Expansionselement, beispielsweise eine Düse, eine Blende oder ein Druckhalteventil.

Wenn in der Rückführleitung die abgezweigte Teilmenge in den festen oder auch in einen halbfesten Zustand überführt wird, empfiehlt sich die Anwendung einer Zerkleinerungseinrichtung für die Unterteilung der Masse in einzelne feine Partikel. Dies kann beispielsweise in sehr einfacher Weise dadurch geschehen, dass eine in der Massekammer vorgesehene Mischscheibe auf ihrem Umfangsrand mit einer Zahnung versehen wird, die einen eingepressten Pfropfen fester Schokolade zerkleinert, also aufmahlt, so dass einzelne feine Partikel entstehen, die dann in der flüssigen Masse während der Temperierung verteilt werden. Es ist aber auch möglich, eine gesonderte Zerkleinerungseinrichtung innerhalb der Rückführleitung anzuordnen, um eine unverändert ausgebildete Temperiereinheit zu nutzen.

Der Wärmetauscher in der Rückführleitung sollte als dynamischer Wärmetauscher ausgebildet sein, d. h. er sollte bewegte Teile, insbesondere Abstreifelemente, Schaber und dergleichen Mischschaufeln aufweisen, um die Masse kontinuierlich von den Kontaktflächen abzunehmen und ein Zuwachsen der Rückführleitung trotz der Temperaturerniedrigung der rückgeführten Masse zu verhindern.

Weiterhin ist es möglich, dass in der zu der Weiterverarbeitungsstation führenden Förderleitung nach der abzweigenden Rückführleitung ein Druckhalteventil angeordnet ist. Dieses Druckhalteventil kann auch entfallen. Es vereinfacht den Druckaufbau und die Abzweigung der rückgeführten Teilmenge. Es versteht sich, dass innerhalb der verschiedenen aufgezeigten Leitungen auch noch weitere Ventile, Absperrorgane oder dergleichen vorgesehen sein können, um die Durchströmung zu steuern und/oder abzusperren.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.1**: zeigt eine erste Ausführungsform der Vorrichtung zur Durchführung des Verfahrens.
- **Fig. 2**: verdeutlicht eine zweite Ausführungsform der Vorrichtung.
- **Fig. 3**: zeigt eine dritte Ausführungsmöglichkeit.

### FIGURENBESCHREIBUNG

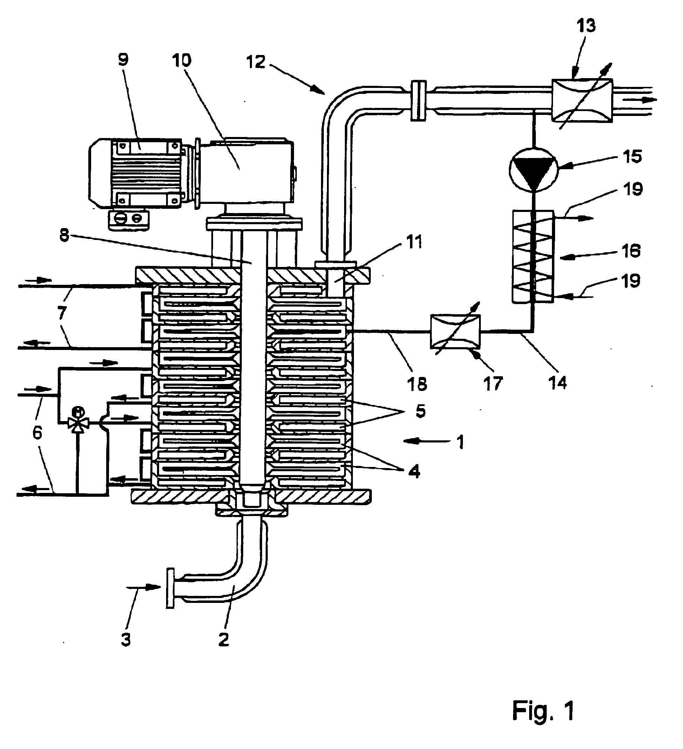

In **Fig. 1** ist zunächst eine Temperiereinheit 1 dargestellt. Die Temperiereinheit 1 ist hier als üblicher Säulentemperer mit vertikal angeordneter Achse ausgebildet. Grundsätzlich ist jede Temperiereinheit zur Durchführung des Verfahrens geeignet.

Die Temperiereinheit 1 weist in ihrem unteren Bereich eine Leitung 2 auf, durch die in einem vorgeschalteten Tank auf 40 bis 50 °C aufgeschmolzene pumpbare Schokolademasse gemäß Pfeil 3 herangeführt wird. Die Masse wird durch eine nicht dargestellte Pumpe befördert. Die erwärmte Masse durchströmt verschiedene Massekammern 4, die etagenweise übereinander angeordnet sind. Zwischen den Massekammern 4 sind jeweils abwechselnd Temperierkammern 5 vorgesehen, die von einem Temperiermedium, oft Wasser, durchströmt werden. Auf diese Weise sind im unteren Bereich der Säule der Temperiereinheit in der Regel eine größere Anzahl von Massekammern 4 innerhalb einer Kühlzone vereinigt. Die oberste Etage dieser Kühlzone kann auch als Kristallisierzone bezeichnet werden. Es ist ein Kühlkreislauf 6 vorgesehen, der sich wie dargestellt verzweigt, so dass zwei Teilkreisläufe gebildet werden, von denen der oberste einer Kristallisierzone und der untere einer Kühlzone zugeordnet sind. Im oberen Bereich der Säule befindet sich eine Nachwärmzone, die grundsätzlich ebenso aus Massekammern 4 und Temperierkammern 5 aufgebaut ist. Es ist ein Wärmekreislauf 7 vorgesehen, der die Temperierkammern 5 der Nachwärmzone durchströmt. Es versteht sich, dass in den Massekammern 4 entsprechende Misch- und Rührwerkzeuge, oft in Form von Scheiben, die mit Mischschaufeln besetzt sind, vorgesehen sind. Diese Rühr -und Mischwerkzeuge werden über die gemeinsame vertikale Welle 8 über einen Motor 9 und ein Untersetzungsgetriebe 10 angetrieben. Am oberen Ausgang 11 der Temperiereinheit 1 beginnt eine Förderleitung 12, die letztlich zu einer nicht dargestellten Weiterverarbeitungsstation führt. Die Weiterverarbeitungsstation kann aus einer Gießanlage, einer Überziehmaschine oder dergleichen bestehen. Die Förderleitung 12 kann insbesondere doppelwandig ausgebildet und an einen Schutzkreislauf angeschlossen sein. Auch eine Schutzheizung ist an dieser Stelle denkbar. Die aufbereitete Masse weist am Ausgang 11 eine Verarbeitungstemperatur von 31 C bis 34 °C auf, die nach Möglichkeit auch unverändert an der Weiterverarbeitungsstation vorliegen sollte. In der Förderleitung kann ein Druckhalteventil 13 vorgesehen sein.

Von der Förderleitung 12, insbesondere vor dem Druckhalteventil 13 zweigt eine Rückführleitung 14 ab, die nur symbolhaft in Strichdarstellung verdeutlicht ist. In der Rückführleitung 14 ist eine Förderpumpe 15, ein Wärmetauscher 16 und ein Expansionselement 17 vorgesehen. Die Rückführleitung 14 endet an einer Massekammer 4 der Temperiereinheit 1. Der Anschluss ist hier so vorgesehen, dass die Rückführleitung 14 in die erste Massekammer der Nachwärmzone einmündet. Zusätzlich kann zwischen dem Expansionselement 17 und der Einmündung der Rückführleitung 14 noch eine Verweilstrecke 18 vorgesehen sein. In der einfachsten Form kann diese Verweilstrecke 18 als entsprechend lang gestaltete Rohrleitung ausgebildet sein. Es ist aber auch möglich, unter Verzicht einer Verweilstrecke 18 das Expansionselement 17 möglichst nahe an dem Ende der Rückführleitung 14 anzuordnen. Der Wärmetauscher 16 ist an einen Kühlkreislauf 19 angeschlossen.

Die Förderpumpe 15 hat nicht nur die Aufgabe der Förderung des rückgeführten Teils der Masse in der Rührführleitung. Die Förderpumpe 15 kann als Druckpumpe ausgebildet sein, um den rückgeführten Teil der Masse unter Druck zu setzen. Es werden hier Drücke von 8 bis 18 bar angestrebt, je nach dem, wie das Expansionselement 17 im Einzelnen ausgebildet ist. Eine Möglichkeit für die Ausbildung des Expansionselementes 17 ist ein Druckhalteventil. Das Expansionselement dient der Herbeiführung eines Druckabbaus der rückgeführten Masse an dieser Stelle, wobei die rückgeführte Masse hier Temperaturen zwischen etwa 20 und 25 °C einnehmen kann. Durch diese Abkühlung, Expansion und Rückführung werden die Kristalle in der Masse angereichert und zusätzlich neu gebildet, so dass damit eine rückgeführte Teilmenge entsteht, die einen relativ großen Anteil stabiler Kristalle aufweist.

Die aufgezeigte Vorrichtung kann in verschiedenen Betriebsweisen betrieben werden. Eine erste Möglichkeit besteht darin, die Temperiereinheit 1 so zu betreiben, wie dies an sich bekannt ist, dabei wird am Ende der Kühl- oder Kristallisierzone eine Massetemperatur in der Größenordnung von 28 °C bis 29 °C erreicht. In der Nachwärmzone wird nachgewärmt, so dass die Masse am Ausgang 11 der Temperiereinheit 1 die gewünschte Verarbeitungstemperatur von etwa 31 °C bis 34 °C aufweist. Dies gilt auch unter Berücksichtigung der Temperatur, die über die rückgeführte Teilmenge mit eingeschleppt wird. Bei dieser Betriebsweise wird gewisser ein Teil der gewünschten Kristalle am Ende der Kühlzone bzw. in der Kristallisierzone bereits gebildet. Diese gebildeten Kristalle befinden sich auch noch zumindest teilweise in der Masse, wenn diese am Ausgang 11 die Verarbeitungstemperatur erreicht hat. In dem die Rückführleitung 14 aufweisenden Kreislauf findet letztlich eine Temperaturabsenkung der rückgeförderten Teilmenge statt, verbunden mit einer Neubildung von Kristallen. Die Kristalle reichem sich an, d. h. die Menge der Kristalle vergrößert sich. Diese Teilmenge mit den angereicherten Kristallen wird dann dem Hauptstrom wieder zugefügt.

In einer zweiten Betriebsweise kann die Temperiereinheit 1 so gesteuert werden, dass vom Eingang der Masse in die Temperiereinheit 1 bis zum Ausgang 11 lediglich eine mehr oder weniger kontinuierliche Abkühlung der Masse auf die Verarbeitungstemperatur von 31 bis 34 °C stattfindet. Die wesentliche Kristallbildung findet dann in der Rückführleitung 14 statt. Die dabei gebildete Menge an Kristallen reicht aus, um den erforderlichen Vorkristallisiergrad zu erreichen, wie er in der Weiterverarbeitungsstation gewünscht wird. Bei dieser zweiten Betriebsweise können der Kühlkreislauf 6 und der Wärmekreislauf 7 zu einem einzigen Kreislauf zusammengefasst werden.

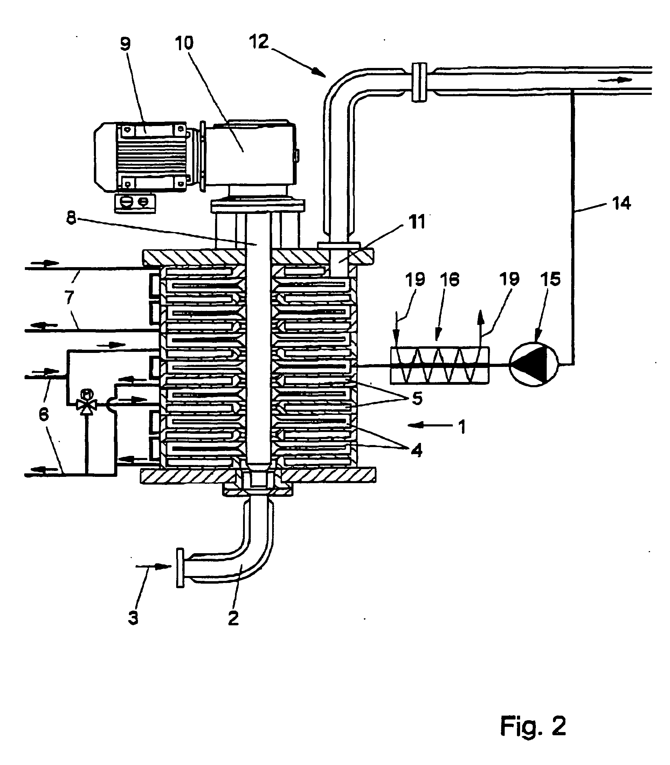

Die in Fig. 2 dargestellte Vorrichtung stimmt in weiten Bereichen mit der Ausführungsform der Fig. 1 überein, insbesondere was die Temperiereinheit 1 anbetrifft. Der Kühlkreislauf bzw. der Wärmekreislauf kann hier abweichend von der Ausführungsform der Fig. 1 ausgebildet sein, wie dargestellt.

Auch hier zweigt von der Förderleitung 12 die Rückführleitung 14 ab. An der Abzweigstelle kann ein T-Stück, ein 3-Wegeventil oder dergleichen vorgesehen sein (nicht dargestellt). In der Rückführleitung 14 ist wiederum die Förderpumpe 15 und der Wärmetauscher 16 angeordnet. Der Wärmetauscher 16 ist hier als dynamischer Wärmetauscher ausgebildet, d. h. er besitzt bewegte Elemente. Der Anschluss der Rückführleitung 14 an die Temperiereinheit ist hier im Bereich einer Massekammer 4 am Anfang der Kristallisationsstufe verwirklicht. Die über die Rückführleitung 14 zurückgeführte Teilmenge der Masse weist auch hier am Eingang in die Temperiereinheit eine Temperatur von 20 bis 25 °C auf. Die Masse ist in diesem Zustand noch pumpbar bzw. förderbar, also zumindest teigig, so dass sie sich mit der die Temperiereinheit 1 durchströmenden Masse hinreichend vermischen kann.

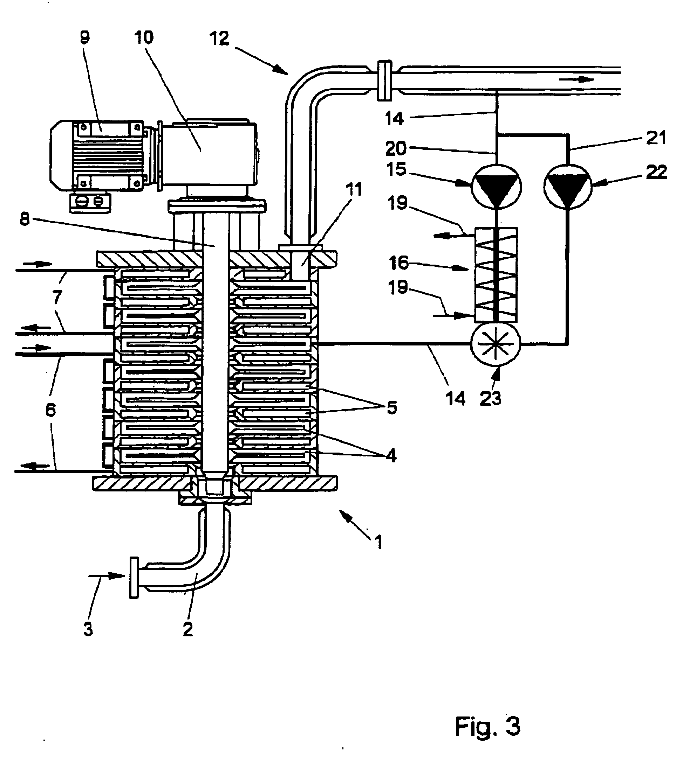

Auch die Ausführungsform der Fig. 3 greift auf die vorangehenden Ausführungsformen zurück. Abweichend davon besitzt die Rückführleitung 14 zwei parallele Teilleitungen 20 und 21. In der Teilleitung 20 ist die Förderpumpe 15 und der Wärmetauscher 16 angeordnet. Auch in der Teilleitung befindet sich eine Förderpumpe 22. Die beiden Teilleitungen 20 und 21 werden im Bereich einer Zerkleinerungseinrichtung 23 zusammengeführt. Die Zerkleinerungseinrichtung 23 kann als Mahlwerk, als Fräse oder dergleichen ausgebildet sein. Sie dient dazu, im Bereich des Ausgangs des Wärmetauschers 16 verfestigte Schokolade in feine Partikel aufzumahlen, die dann von dem Strom flüssiger rückgeführter Masse in der Teilleitung 21 mitgenommen und zusammen mit dieser der Temperiereinheit 1 zugeführt werden. Es versteht sich, dass die feinen festen Partikel eine Zusammenballung der gebildeten Kristalle darstellen. Es ist weiterhin erkennbar, dass die Rückführleitung 14 hier am Ende der Kühl- bzw. Kristallisierzone an eine dort vorhandene Massekammer 4 angeschlossen ist. Die Temperiereinheit 1 weist hier eine Kühlzone und eine Nachwärmstufe auf. Es können auch mehrere Kühlzonen vorgesehen sein.

### BEZUGSZEICHENLISTE

- 1: Temperiereinheit
- 2: Leitung
- 3: Pfeil
- 4: Massekammer
- 5: Temperierkammer
- 6: Kühlkreislauf
- 7: Wärmekreislauf
- 8: Welle
- 9: Motor
- 10: Untersetzungsgetriebe

- 11: Ausgang
- 12: Förderleitung
- 13: Druckhalteventil
- 14: Rückführleitung
- 15: Förderpumpe
- 16: Wärmetauscher
- 17: Expansionselement
- 18: Verweilstrecke
- 19: Kühlkreislauf
- 20: Teilleitung

- 21: Teilleitung
- 22: Förderpumpe
- 23: Zerkleinerungseinrichtung

## Patentansprüche

1. Verfahren zum kontinuierlichen Aufbereiten von zu verarbeitenden fetthaltigen Massen, indem die fließfähige Masse während ihrer Temperierung in einer Kühlzone zur Bildung von Kristallen in der Masse zumindest abgekühlt und in einer nachfolgenden Nachwärmzone gegebenenfalls wiedererwärmt, und einer Weiterverarbeitung zugeführt wird, wobei ein Teil der Masse von der der Weiterverarbeitung zugeführten Masse abgezweigt, rückgeführt und der zumindest abgekühlten Masse während ihrer Temperierung wieder hinzugefügt wird, **dadurch gekennzeichnet, dass** der abgezweigte Teil der Masse vor der Hinzufügung zu der zu temperierenden Masse zur Vermehrung der in ihr enthaltenen stabilen Kristalle sowie zur zusätzlichen Neubildung stabiler Kristalle gekühlt wird.

2. Verfahren nach Anspruch 1, **dadurch gekennzeichnet, dass** der abgezweigte Teil der Masse vor der Hinzufügung zu der zu temperierenden Masse unter Druck gesetzt und expandiert wird.

3. Verfahren nach Anspruch 1 oder 2, **dadurch gekennzeichnet, dass** der abgezweigte Teil der Masse vor der Hinzufügung zu der zu temperierenden Masse in den festen Zustand überführt und unterteilt wird, und dass die unterteilten Partikel der zu temperierenden Masse während der Temperierung wieder hinzugefügt werden.

4. Verfahren nach Anspruch 1, **dadurch gekennzeichnet, dass** der abgezweigte Teil der Masse der zu temperierenden Masse während oder nach der Abkühlung wieder hinzugefügt wird.

5. Verfahren nach Anspruch 1 oder 2, **dadurch gekennzeichnet, dass** der abgezweigte Teil der Masse in flüssigem Zustand gehalten und so der zu temperierenden Masse während der Temperierung wieder hinzugefügt wird.

6. Vorrichtung zum kontinuierlichen Aufbereiten von zu verarbeitenden fetthaltigen Massen, mit einer eine Kühlzone und eine nachfolgende Nachwärmzone aufweisenden Temperiereinheit (1), in der die fließfähige Masse in der Kühlzone während ihrer Temperierung zur Bildung von Kristallen in der Masse zumindest abgekühlt und in der Nachwärmzone gegebenenfalls nachfolgend wiedererwärmt wird, einer von deren Ausgang zu einer Weiterverarbeitungsstation führenden Förderleitung (12) und mit einer an die Temperiereinheit (1) angeschlossenen und eine Förderpumpe (15) enthaltenden Rückführleitung (14), die von der Förderleitung (12) abzweigt, insbesondere zur Durchführung des Verfahrens nach einem der vorangehenden Ansprüche, **dadurch gekennzeichnet, dass** zur Abkühlung und Vermehrung der in dem abgezweigten Teil der Masse enthaltenen stabilen Kristalle sowie zur zusätzlichen Neubildung stabiler Kristalle in der Rückführleitung (14) ein Wärmetauscher (16) vorgesehen ist.

7. Vorrichtung nach Anspruch 6, **dadurch gekennzeichnet, dass** in der Rückführleitung (14) eine Druckpumpe und ein Expansionselement (17) vorgesehen sind.

8. Vorrichtung nach Anspruch 6 oder 7, **dadurch gekennzeichnet, dass** eine Zerkleinerungseinrichtung (23) für die Unterteilung fester Masse in einzelne Partikel vorgesehen ist.

9. Vorrichtung nach Anspruch 6, **dadurch gekennzeichnet, dass** der Wärmetauscher (16) als dynamischer Wärmetauscher ausgebildet ist.

10. Vorrichtung nach Anspruch 6, **dadurch gekennzeichnet, dass** in der zu der Weiterverarbeitungsstation führenden Förderleitung (12) nach der abzweigenden Rückführleitung (14) ein Druckhalteventil (13) angeordnet ist.

## Claims

1. Method for continuously tempering fat containing masses to be processed, the flowable mass during tempering is at least cooled in a cooling zone to form crystals in the mass and is eventually reheated in a downstream reheating zone, and is conveyed for further processing, in which a part of the mass is branched from the mass to be further processed, taken back and added to the at least cooled mass during tempering, **characterized in that** the branched part of the mass prior the addition to the mass to be tempered is cooled to increase the amount of the stable crystals and to form further stable crystals in the branched part of the mass.

2. Method of claim 1, **characterized in that** the branched part of the mass is subjected to pressure and expanded prior the addition to the mass to be tempered.

3. Method of claim 1 or 2, **characterized in that** the branched part of the mass is subjected to the firm state and divided prior the addition to the mass to be tempered, and **in that** the divided particles are added to the mass to be tempered during tempering.

4. Method of claim 1, **characterized in that** the branched part of the mass is again added to the mass to be tempered during or after the cooling.

5. Method of claim 1 or 2, **characterized in that** the branches part of the mass is kept in liquid state and is added to the mass to be tempered during tempering.

6. Apparatus for continuously tempering fat containing masses to be processed, including a tempering unit (1) having a cooling zone and a subsequent reheating zone, the flowable mass in the cooling zone is at least cooled during tempering to form crystals in the mass and is eventually reheated in a downstream reheating zone, and including a conveying conduit (12) connecting the outlet of the reheating zone to a station for further processing and a taking back conduit being connected to the tempering unit (1) and including a pump (15), the taking back conduit branching from the conveying conduit (12), especially to perform the method of one of the preceding claims, **characterized in that** a heat exchanger (16) is arranged in the taking back conduit (14) for cooling and increasing the amount of stable crystals of the mass and for new forming of additional stable crystals in the taking back conduit (14).

7. Apparatus of claim 6, **characterized in that** a pressure generating pump and an expansion element (17) are arranged in the taking back conduit (14).

8. Apparatus of claim 6 or 7, **characterized in that** a disintegrating unit (23) is arranged to divide the firm mass in individual particles.

9. Apparatus of claim 6, **characterized in that** the heat exchanger (16) is designed to be a dynamic heat exchanger.

10. Apparatus of claim 6, **characterized in that** a pressure keeping valve (13) is arranged in the conveying conduit (12) to a station for further processing downstream the branching taking back conduit (14).

## Revendications

1. Procédé de préparation en continu de masses à traiter contenant de la matière grasse, dans lequel la masse coulante est, pendant son équilibrage en température, au moins refroidie dans une zone de refroidissement, pour former dans sa masse des cristaux, puis réchauffée, le cas échéant dans une zone de réchauffage consécutive et soumise à un traitement suivant, une partie de la masse étant séparée de la masse amenée au traitement suivant, ramenée et rajoutée à la masse au moins refroidie pendant son équilibrage en température, **caractérisé en ce que** la partie de masse séparée est refroidie avant son rajout à la masse dont la température est à équilibrer pour la multiplication des cristaux solides qu'elle contient ainsi que pour la nouvelle formation de cristaux solides.

2. Procédé selon la revendication 1, **caractérisé en ce que** la partie séparée de la masse est soumise à une pression et expansée avant l'ajout à la masse dont la température est à équilibrer.

3. Procédé selon la revendication 1 et 2, **caractérisé en ce que** la partie séparée de la masse est amenée à l'état solide et divisée avant le rajout à la masse dont la température est à équilibrer et **en ce que** les particules divisées sont rajoutées à la masse dont la température est à équilibrer.

4. Procédé selon la revendication 1 et 2, **caractérisé en ce que** la partie séparée de la masse dont la température est à équilibrer est rajoutée pendant ou après le refroidissement.

5. Procédé selon la revendication 1 et 2, **caractérisé en ce que** la partie séparée de la masse est maintenue à l'état liquide et rajoutée ainsi à la masse dont la température est à équilibrer pendant l'équilibrage.

6. Dispositif pour la préparation en continu de masses à traiter contenant de la matière grasse avec une unité de température (1), présentant une zone de refroidissement et une zone de réchauffage consécutive, dans laquelle la masse coulante est au moins refroidie dans la zone de refroidissement pendant l'équilibrage de température pour former des cristaux dans la masse et ensuite le cas échéant à nouveau chauffée dans la zone de réchauffement ultérieur, avec une conduite de circulation (12) conduisant à une station de traitement ultérieur et avec une conduite de retour (14) reliée à l'unité de température (1) et présentant une pompe de circulation (15), qui dévie de la conduite de circulation, notamment pour réaliser le procédé selon l'une des revendications précédentes, **caractérisé en ce que** pour le refroidissement et la multiplication des cristaux solides contenus dans la partie déviée de la masse ainsi que pour former en plus, à nouveau, des cristaux solides, il est prévu un échangeur de chaleur (16) dans la conduite de retour (14).

7. Dispositif selon la revendication 6, **caractérisé en ce qu'**il est prévu dans la conduite de retour (14) une pompe de pression et un élément d'expansion.

8. Dispositif selon la revendication 6 ou 7, **caractérisé en ce qu'**il est prévu un dispositif de fragmentation (23) pour diviser la masse solide en particules individuelles.

9. Dispositif selon la revendication 6, **caractérisé en ce que** l'échangeur de chaleur (16) est un échangeur de chaleur dynamique.

10. Dispositif selon la revendication 6, **caractérisé en ce qu'**une soupape de maintien de la pression (13) est disposée dans la conduite de circulation (12) de la station de traitement ultérieur après la conduite de retour (14) qui dévie.
